# EUROPEAN PATENT APPLICATION

(11) **EP 3 702 491 A1**
(43) Date of publication of application: **02.09.2020**
(21) Application number: 17929663.7
(22) Date of filing: 24.10.2017
(51) Int. Cl.: C23C 24/02, H01M 8/0202, H01M 8/0234

(54) **METAL MATERIAL AND METHOD FOR PRODUCING SAME**

(71) Applicant: Usui Co., Ltd., Sunto-gun Shizuoka 411-8610 (JP)
(72) Inventor: KURAHASHI Ryurou, Osaka-shi Osaka 551-0022 (JP); SHIN Yoshio, Osaka-shi Osaka 551-0022 (JP); KAWASAKA Kenji, Osaka-shi Osaka 551-0022 (JP); FUKUDOME Yoshihisa, Osaka-shi Osaka 551-0022 (JP); KAKUDOU Shigeo, Osaka-shi Osaka 551-0022 (JP)
(74) Representative: TBK
(86) International application number: PCT/JP2017/038247
(87) International publication number: WO 2019/082254

(57) **Abstract**

[Problem] Provided are a metal material including a passive film on a surface and having corrosion resistance while having a small contact resistance, and a method for producing the metal material. Examples of the metal material include a material that is preferable as a material of a separator and a current collector plate in a fuel cell. [Solution] Conductive particles 3 are embedded in and caused to adhere to a metal substrate 1 including, on a surface thereof, a passive film 2, in a state where the conductive particles 3 penetrate the passive film 2 in a thickness direction, and the surface of the metal substrate is covered with a coating film having conductivity and corrosion resistance. To cause the conductive particles to adhere in such a manner, the conductive particles 3 may be scattered on the metal substrate 1 on which the passive film 2 is formed, and the conductive particles 3 may be pushed into the surface of the metal substrate 1 by pressing with a roll or the like.

## Description

### Technical Field

The present invention relates to a metal material that can be used as a fuel cell component or the like, includes a passive film on a surface, and has excellent corrosion resistance, but low contact resistance, and a method for producing the metal material.

### Background Art

Fuel cells extract energy as electric power from the reaction between hydrogen and oxygen and are expected to be a clean power source that does not emit CO2. A large number of plate-shaped components called separators are used inside a fuel cell. The separator mainly plays a role in forming each flow path of hydrogen and oxygen, and providing electrical connection between cells.

Basically, the following characteristics are required of a separator, particularly a separator in a polymer electrolyte fuel cell (PEFC).
a) The separator needs to have excellent corrosion resistance. This is because the separator is used in a dilute sulfuric acid solution at about 100°C and by applying a voltage of about 1 V.
b) The separator needs to have low contact resistance. This is because the separator needs to contact adjacent electrodes to electrically connect the cells.
c) The separator needs to have a surface on which a groove can be easily formed. This is because, in order to increase the power generation, it is advantageous to make the size of grooves formed on the surface as flow paths for hydrogen and oxygen finer and thus to increase the surface area.

It is noted that the above-described characteristics are also required of a current collector plate to be incorporated in a fuel cell together with the separator.

Conventional separator materials include separator materials made of carbon fiber reinforced plastic and separator materials made of titanium (Ti) and covered with a graphite coating, however, there are problems in that it is not possible to reduce the plate thickness (in the case of the separator material made of carbon fiber reinforced plastic), the cost is high (in the case of the separator material made of titanium (Ti) and covered with the graphite coating), and the grooves are difficult to form (in both cases).

As an alternative to these separator materials, a separator made of aluminum has been proposed in recent years. For example, PTLs 1 and 2 below describe that a separator is obtained by forming two layers of a coating film having conductivity and corrosion resistance on the surface of a substrate made of Al or an Al alloy.

### Citation List

### Patent Literature

PTL 1: Japanese Unexamined Patent Application Publication No. 2004-111079
PTL 2: Japanese Patent Publication No. 5132224

### Summary of Invention

### Technical Problem

Each of the above PTLs describes that, after removing an oxide film (Al2O3, the oxide film being a passive film having low conductivity) on a surface of an Al plate (or an Al alloy or the like), a coating film having conductivity and corrosion resistance is formed on the plate surface. However, even if being removed, the oxide film on the Al plate is immediately formed again in the air. In addition, even if being as thin as several nm, the oxide film has extremely high electric resistance. Therefore, in practice, it is difficult to reduce the electric resistance between the Al plate and the coating film, and thus, the contact resistance is not sufficient for the use in a fuel cell component.

Further, if the coating film is formed on the surface of the Al plate, another problem is that the coating film tends to peel off. If the coating film peels off, the oxide film (Al2O3) cannot withstand corrosion by the dilute sulfuric acid, and thus, the durability of the fuel cell separator or the like is lost.

The above-described inconveniences make it difficult to use an Al plate or the like as a fuel cell component, and thus, hinder reduction in size, weight, and cost of the fuel cell.

The object of the present invention is to solve the problems mentioned above. The present invention provides a metal material that has low contact resistance, while having a passive film on a surface and having corrosion resistance, and thus, has preferable characteristics as a material for a fuel cell component, and a method for producing the metal material.

### Solution to Problem

A metal material according to the present invention is a metal material, in which conductive particles adhere to a metal substrate including, on a surface thereof, a passive film (oxide film), in a state where the conductive particles penetrate the passive film in a thickness direction, and the surface of the metal substrate is covered with a coating film having conductivity and corrosion resistance. All or a part of the conductive particles penetrate the passive film in the thickness direction, that is, the conductive particles are in contact with the metal substrate on an inner side of the passive film and are exposed to the outside of the passive film, and further, the surface of the metal substrate (that is, the surface of the passive film) is covered with a coating film having conductivity and corrosion resistance.

In addition to aluminum (Al) or an alloy of aluminum described later, copper (Cu) or an alloy of copper, and the like can be used as the above-mentioned metal substrate including the passive film on the surface. As the conductive particles, for example, ceramic particles can be used, and particles such as tungsten carbide (WC), TiB₂, and ZrB₂ having high electrical conductivity are advantageous. It is also conceivable to use a carbon-based material such as "graphene" as the conductive particles. It is also preferable that such conductive particles are hard and have corrosion resistance.

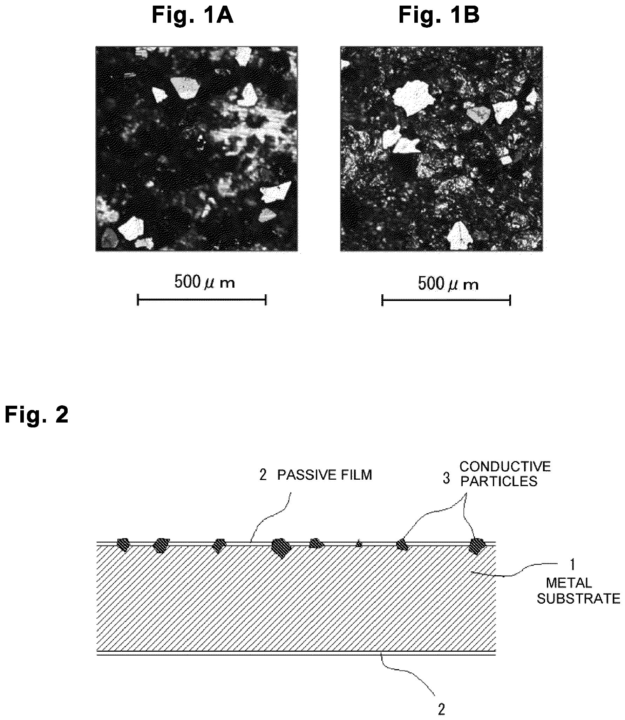

Figs. 1A and 1B are micrographs of a surface of an example of a metal material (containing no coating film) according to the present invention, and Fig. 2 illustrates an image diagram of a cross section of such a metal material. In the example of Fig. 2, the conductive particles adhere to only one side of the metal substrate, however, the conductive particles may adhere to both sides (both the front and back sides) of the metal substrate, in a state where the conductive particles penetrate the passive film in the thickness direction.

Such a metal material includes a passive film and thus has a certain level of corrosion resistance before being covered with the above-mentioned coating film. However, the electrical conductivity from the metal substrate on the inside to the outside via the conductive particles is ensured, and thus, the contact resistance is low. Further, the surface of the metal substrate is covered with the coating film having conductivity and corrosion resistance, and thus, the corrosion resistance of the surface of the metal material according to the invention is reinforced while low contact resistance is maintained. Therefore, the metal substrate can be used in various types of electric components including fuel cell components such as a separator and a current collector plate.

Further, a metal material is preferable in which WC particles being conductive particles adhere to Al or an Al alloy being a metal substrate including, on a surface thereof, a passive film, in a state where the conductive particles penetrate the passive film in a thickness direction.

Al and Al alloys have an oxide film (Al2O3) which is a passive film formed by heating or the like at the time of manufacturing, and even if the oxide film is removed, such an oxide film is formed again by contact with the air. Therefore, the metal material to which the conductive particles are adhered as described above can be used for an electric component and the like as a member having low contact resistance while having some degree of corrosion resistance. Al and Al alloys are low-cost general-purpose metals and are easy to process and lightweight, and thus, the metal material according to the present invention has a wide possibility of use and can bring great benefit. Al and Al alloys are easily formed into a plate and grooves can be easily formed on the plate, and thus when the corrosion resistance is reinforced by application of a coating and the like and the metal material is used as a separator or a current collector plate in a fuel cell, the fuel cell can be made smaller and lighter, and thus, a significant cost reduction is possible.

It is noted that, as an example of the Al alloy, an Al-Mg alloy or an Al-Mg-Ti alloy having high corrosion resistance may be used. Further, it is more preferable to use an Al-Mg alloy (see Japanese Unexamined Patent Application Publication No. 2015-145516) including crystals of fine particles having a particle size of 100 nm or less (nanostructure) in a crystal structure having a particle size of 10 µm or less, or an Al-Mg-Ti alloy having a similar nanostructure. Due to the small size of the crystal grains, the Al-Mg alloy or Al-Mg-Ti alloy containing the nanostructure has a slow progression of corrosion and a particularly high corrosion resistance, and thus, is suitable for applications requiring special corrosion resistance.

On the other hand, when the conductive particles are formed of WC, since WC has excellent electrical conductivity, the effect of reducing the contact resistance of the metal material is remarkable. Further, WC has excellent corrosion resistance, and thus, together with the passive film, WC contributes to the corrosion prevention of the metal substrate, and further, since WC is hard, WC is advantageous from the viewpoint of wear resistance.

Further, the hard WC can be easily attached by various means to Al or the Al alloy, which are relatively soft among metals. Therefore, from the viewpoint of ease in production of the above-described metal material, it is advantageous to use Al or an Al alloy as the metal substrate and WC particles as the conductive particles.

It is preferable that the surface of Al or the Al alloy being the metal substrate (the surface to which the conductive particles adhere) is covered with a coating film (a coating material film) having conductivity and corrosion resistance. The conductivity and the corrosion resistance of the coating film may be determined in accordance with the use environment and use conditions of the metal material.

When the surface is covered with the coating film as described above, the metal material can be used even in a strongly corrosive environment where the corrosion resistance due to the passive film included in the metal substrate is not sufficient, such as a fuel cell component. Further, since the coating film has conductivity, the electrical conductivity through the coating film, or from the metal substrate on the inside via the conductive particles and the coating film is secured, and thus, the contact resistance of the metal material can be kept low.

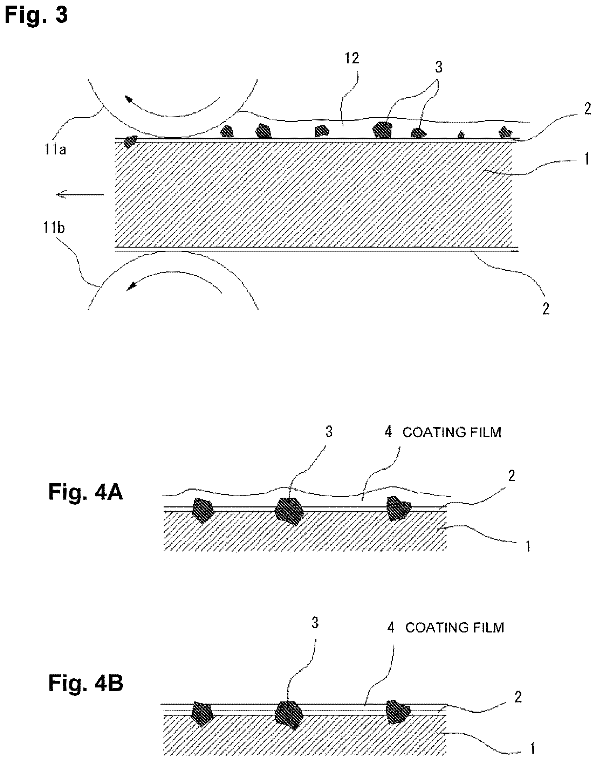

The coating film may be formed so as to cover the conductive particles (see Fig. 4A), however, depending on the use environment (that is, when the conductive particles and the thin coating film have sufficient corrosion resistance), the coating film may be thinned to expose the conductive particles to the outside of the coating film (see Fig. 4B).

The metal material according to the present invention has an advantage in that the thickness of the coating film can be reduced under the same corrosion environment as compared with the examples of PTLs 1 and 2. In the examples of PTLs 1 and 2, the passive film of the metal substrate is removed, and the surface of the metal substrate is thickly covered with two layers of a coating film, however, in the metal material according to the present invention, the metal substrate is used without removing the passive film included on the metal substrate, and thus, sufficient corrosion resistance can be obtained even if the coating film is thin. When a thin coating film is formed, in a case where a groove is formed in the metal material, (the width of) the groove can be made finer, which is particularly advantageous for the use in a fuel cell separator and the like.

Moreover, a higher adhesiveness of the coating film to the metal substrate can be obtained than in the examples of PTLs 1 and 2. The surface of the metal substrate is not simply a flat surface, the conductive particles are dispersed and protrude from the surface, and thus, the coating film strongly adheres to the metal substrate due to the so-called anchor effect. Therefore, even if the metal material is used for a long time in a state of being immersed in a corrosive liquid or the like, the coating film hardly peels off. This effect can be obtained in both the case where the coating film covers the conductive particles and the case where the conductive particles are exposed.

It is especially preferable that the surface of the metal substrate is covered with a graphite coating.

Graphite coatings, that is, coatings containing graphite, exhibit conductivity due to the contained graphite and have corrosion resistance suitable for the use environment when an appropriate base resin is selected. Therefore, the metal material having a surface covered with the graphite coating has preferable conductivity and corrosion resistance.

The metal material according to the present invention may be used as a fuel cell component (such as a separator and a current collector plate).

The reason for this is that the metal material according to the invention has corrosion resistance and low contact resistance, and further, when the metal substrate is made of a soft material such as Al or an Al alloy, the metal substrate can be easily formed in a plate shape and fine grooves or the like can be easily formed on the surface of the metal substrate. Al and Al alloys are an inexpensive material with good workability and can be formed as thin plates to reduce size and weight. Further, the thermal conductivity of Al and Al alloys is high, and thus, Al and Al alloys have excellent cooling performance and are extremely suitable as fuel cell components. The corrosion resistance of the metal material can be reinforced by covering the surface with a coating film having conductivity and corrosion resistance as described above. In other words, it can be said that the metal material according to the present invention has the characteristics required for the above-described separator and current collector plate for fuel cells, and the like.

It is preferable that the metal material according to the present invention is a plate-shaped metal material formed with a groove by press working to be used as a fuel cell component, and a particle size of the WC particles is 10 µm or less.

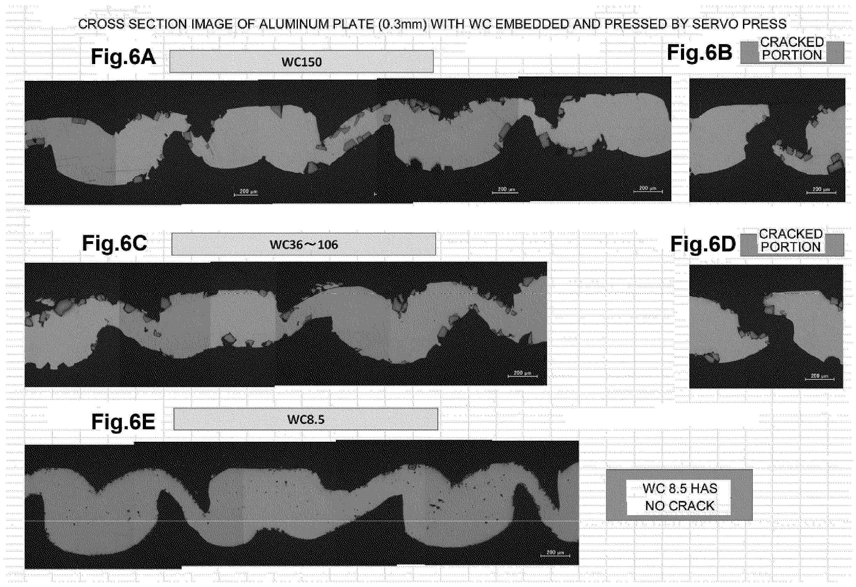

To construct a fuel cell that is compact and has excellent power generation performance, it is necessary to use, as the separator, a plate having a thickness of about 0.3 mm or less on which a groove having a width of about 0.5 mm or less is formed. If the groove is formed by press working, it is inevitable that a portion having a particularly small thickness is generated in a part of the plate. Relating to this, in the investigation by the inventors, when the particle size (maximum size) of the WC particles exceeded 10 µm, in some cases, a part of the plate, that is, a part of the metal substrate, broke during the above-described groove forming by press working (a broken portion was formed in the groove) (see Figs. 6B and 6D). On the other hand, if the particle size of the WC particles was 10 µm or less, such cracking did not occur (see Fig. 6E).

The WC particles, being the conductive particles, preferably have a particle size exceeding the thickness of the passive film (generally, not more than about 500 nm), however, according to the investigation by the inventors, a particle size of about 1 µm or more is preferable. This is because conductive particles that are smaller than 1 µm are less likely to adhere to the surface of the metal substrate. Therefore, it is preferable that the WC particles include particles having a particle size of 1 µm or more and do not include particles having a particle size of more than 10 µm.

A method for producing a metal material according to the present invention includes pushing, into a surface of a metal substrate including a passive film, conductive particles having a particle size larger than a thickness of the passive film to cause the conductive particles to adhere to (be retained in) the metal substrate in a state where the conductive particles penetrate the passive film in a thickness direction.

The methods for pushing the conductive particles into the surface of the metal substrate include, for example, hammering or pressing the conductive particles into the surface of the metal material at room temperature or at a high temperature, or shooting the conductive particles into the surface of the metal material by a shot blast machine.

If the conductive particles are pushed into the surface of the metal substrate in this manner, the above-described metal material (see Figs. 1A, 1B, and 2) can be produced to which the conductive particles are adhered in a state of penetrating the passive film in the thickness direction. By selecting conductive particles that are harder than (the passive film of) the metal substrate, the above-described metal material can be obtained particularly easily.

It is particularly preferred that the production method includes scattering the conductive particles on the surface of the metal substrate, and performing pressing by using a roll, a hydraulic press, or the like to push the conductive particles into the surface of the metal substrate.

There are various methods for pushing the conductive particles into the surface of the metal substrate as described above, however, it is also possible to adopt the pressing with a roll as described herein. For example, as illustrated in Fig. 3, the metal substrate and the conductive particles are continuously and sequentially pressed by using a rolling roll.

In this manner, the above-described metal material (see Figs. 1A, 1B, and 2) to which the conductive particles are adhered in a state of penetrating the passive film in the thickness direction can be produced extremely smoothly and efficiently.

It is preferable that the conductive particles are scattered together with a viscous fluid on the surface of the metal substrate when the pressing is performed by using the roll or the like as described above. In the example of Fig. 3, such a viscous fluid (reference numeral 12) is used on the surface of the metal substrate.

By dispersing, on the metal substrate, the conductive particles in a state of being included in the viscous fluid, the position of the particles is substantially fixed by the action of the viscous fluid, and thus, the particles can be prevented from scattering or accumulating in a specific portion due to the influence of vibration, wind, or the like. Therefore, a homogeneous metal material in which the conductive particles are substantially uniformly dispersed on the metal substrate can be produced.

As the above-mentioned viscous fluid, it is particularly preferable to use lubricating oil or lubricating grease.

The use of lubricating oil or lubricating grease as the viscous fluid provides lubricity in addition to the advantages described above. That is, the lubricity reduces the friction at the time of pushing the conductive particles onto the surface of the metal substrate, and thus, the energy required for the pushing can be reduced.

It is preferable that after pushing the conductive particles into the surface of the metal substrate, a coating film having conductivity and corrosion resistance is formed on the surface of the metal substrate.

In this manner, as described above, a metal material having high corrosion resistance and low contact resistance can be obtained and used as a fuel cell component or the like.

It is noted that, as described above, the coating film may be thick to cover the conductive particles (see Fig. 4A), however, depending on the use environment, the coating film may be thin and the conductive particles may be exposed to the outside of the coating film (see Fig. 4B).

To use the metal material as a fuel cell component, it is preferable that WC particles being conductive particles having a particle size of 10 µm or less are pushed into a surface of plate-shaped Al or an Al alloy being a metal substrate including a passive film, and then a groove is formed in the metal substrate by press working, and a coating film having conductivity and corrosion resistance is formed on the surface.

In this manner, for example, a large number of grooves having a width of about 0.5 mm or less are formed by press working on a thin plate having a thickness of about 0.3 mm or less without cracking the plate, and thus, a preferable separator, current collector plate, and the like for a fuel cell having sufficient corrosion resistance and low contact resistance can be formed smoothly.

### Advantageous Effects of Invention

The metal material according to the present invention has a certain level of corrosion resistance due to the passive film included on the surface of the metal substrate, and has low contact resistance due to the conductive particles that are provided to penetrate the passive film. Therefore, the metal material according to the present invention is suitable for the use as a constituent member for various types of electric components and can also be used as a separator or a current collector plate for a fuel cell. When the metal substrate is made of Al or an Al alloy, the possibility of use is particularly wide. By covering the surface with a coating film having conductivity and corrosion resistance, the metal material can be used even in a strongly corrosive environment and is suitable as a fuel cell component.

In the method for producing the metal material according to the present invention, it is possible to produce the metal material by pushing conductive particles into a metal substrate. By scattering the conductive particles on the surface of the metal substrate and then performing the pressing with a roll, the metal material can be produced particularly smoothly and efficiently. When the pressing is performed with the roll, placing the conductive particles together with a viscous fluid on the surface of the metal substrate is advantageous to produce a homogeneous metal material. By forming a groove by press working into a metal material in which appropriate conductive particles are pushed into and adhered to a metal substrate such as Al, and covering the surface of the metal material by an appropriate coating film, the metal material can be used as a fuel cell component such as a separator and a current collector plate.

### Brief Description of Drawings

Figs. 1A and 1B are micrographs of a surface (uncoated) of a metal material according to the invention. Fig. 1A is a micrograph of an Al substrate in which WC particles are embedded, and Fig. 1B is a micrograph of an Al-Mg-Ti alloy as a substrate in which WC particles are embedded in the surface of the substrate.
Fig. 2 is an image diagram illustrating a cross section of a metal material according to the invention. It is noted that proportions of thickness, size, and the like of each part are not accurately represented.
Fig. 3 is an image diagram illustrating a method for producing a metal material according to the invention. Again, the dimensional relationship of each part is not accurate.
Figs. 4A and 4B are image diagrams of a cross section near a coating film of a metal material (including the coating film) according to the invention. Again, the dimensional relationship of each part is not accurate. Fig. 4A illustrates an example of a thick coating film, and Fig. 4B illustrates an example of a thin coating film.
Fig. 5 is a diagram illustrating essential points of a contact resistance test performed on the metal material and the like according to the invention.
Figs. 6A to 6E are micrographs of lateral cross sections of the metal material according to the invention in which a plurality of grooves are formed by press working. Figs. 6A and 6B illustrate a metal material in which WC particles having a maximum particle size of 150 µm are embedded in the surface, Figs. 6C and 6D illustrate a metal material in which WC particles having a particle size of 36 to 106 µm are embedded in the surface, and Fig. 6E illustrates a metal material in which WC particles having a maximum particle size of 8.5 µm are embedded in the surface.

### Description of Embodiments

### Examples of the invention will be described below.

The present inventors have manufactured and tested a novel metal material test piece using a general aluminum plate as a raw material, with the aim of reducing the contact resistance of the plate while taking advantage of the corrosion resistance of a passive film (Al2O3) on the surface of the aluminum plate without removing the passive film. The details are described below.
1) A commercially available Al plate (1000 series, thickness 0.3 mm) is purchased and cut to obtain a 50 mm x 50 mm plate-shaped Al substrate.
2) Lubricating oil is applied to the surface of the Al substrate (one side surface, an upper surface when the plate is placed horizontally). WC particles are dispersed in the lubricating oil in an amount of 10 wt.%. WC particles have excellent conductivity and a high hardness of about HB 3000. Here, WC particles having an average particle size of 80 µm were used.
3) The Al substrate as described in 2) is rolled by using a small rolling mill. Fig. 3 is an image diagram illustrating a rolling process. Reference numeral 1 denotes an Al substrate (metal substrate), reference numeral 2 denotes a passive film, reference numeral 3 denotes WC particles (conductive particles), reference numerals 11a and 11b denote rolling rolls, and reference numeral 12 denotes lubricating oil.
4) By the above-mentioned rolling, a metal material test piece is obtained in which the WC particles 3 are embedded in the Al substrate 1 in a state as illustrated in Fig. 2. Fig. 1A is a micrograph of a surface of the test piece, in which white masses in the image are WC particles. The passive film 2 having a thickness of about 0.5 µm or less exists on the surface of the Al substrate 1, however, many of the WC particles 3 pierce the passive film 2 and reach the Al substrate 1, and such WC particles 3 penetrate the Al substrate 1 in a state where they are in contact with the Al substrate 1 and are exposed to the outside (a side facing the outside air).
5) After the above rolling is completed, the lubricating oil is removed from the metal material test piece.
6) A graphite coating is applied on the surface of the Al substrate 1, that is, on the passive film 2 on which the WC particles 3 are scattered. The graphite coating is a coating containing graphite particles and the like in a resin component that forms a base. As illustrated in Fig. 4A or Fig. 4B, the thickness of a coating film 4 formed by the coating can be appropriately set, however, here, as illustrated in Fig. 4A, the coating film 4 has a thickness of about 10 µm (preferably about 1 to 20 µm) that covers the passive film 2 and the WC particles 3. For the graphite coating, the corrosion resistance is increased by selecting the resin component, and the conductivity is appropriately set by selecting the amount of graphite and the like.

The contact resistance value of the manufactured metal material test piece was measured. The measurement was performed using the test pieces obtained by the above 4) and 6) (referred to as Example 1 and Example 2, respectively), an Al substrate alone purchased and cut to the above-mentioned size (Comparative Example 1), and the Al substrate alone coated with the same graphite coating as in 6) above (Comparative Example 2), with a contact load set to 7 kgf/cm2. As a result, the contact resistance values of the test pieces of Examples 1 and 2 were 1/100 or less of those of the test pieces of Comparative Examples 1 and 2.

It is thought that, as described above, the Al substrate 1 includes the passive film on the surface, and thus, the contact resistance of the Al substrate alone is large, as indicated by Comparative Examples 1 and 2, however, as indicated by Examples 1 and 2, the metal material test piece to which the WC particles 3 are adhered has a structure in which the Al substrate 1 in the interior and the highly conductive WC particles 3 (and the coating film 4 in Example 2) are connected in a state where the electric resistance is low, and thus, the contact resistance is low.

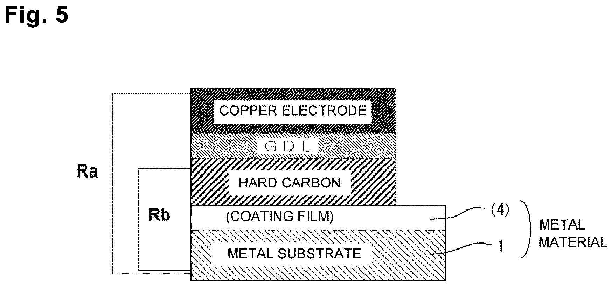

The contact resistance of the above-described metal material test piece and the like was further measured in a state where the metal material test piece was combined with a copper electrode, a gas diffusion layer (GDL), and hard carbon, as illustrated in Fig. 5. That is, the metal material test piece was arranged at a position of a current collector plate in a fuel cell, and the contact resistance in relation to the other components was measured.

The measurement was performed by arranging, at the position of the metal material (a metal substrate 1,including the coating film 4 depending on the test piece) in Fig. 5, each of the test pieces of Examples 1 and 2 or each of the test pieces of Comparative Examples 1 and 2 and applying a contact load of 7 kgf/cm2. Then, as illustrated in the drawing, a resistance value Ra between the copper electrode and the Al substrate and a resistance value Rb between the hard carbon and the Al substrate are measured.

Table 1 shows the resistance values obtained in the measurement in Fig. 5. In Comparative Example 1 relating to the Al substrate alone to which the WC particles 3 are not adhered or the like, and in Comparative Example 2 in which only the graphite coating of the above 6) was applied to the Al substrate alone, Ra and Rb are both high, however, in Examples 1 and 2 relating to the metal material obtained by the above 4) and 6), both Ra and Rb are considerably lower.

**Table 1**

| Item | Electric resistance value | |
|---|---|---|
| | Ra (mΩ*cm²) | Rb (mΩ*cm²) |
| (Comparative Example 1) | | |
| Aluminum plate | 2292 | 2189 |

| (Comparative Example 2) | | |
|---|---|---|
| Aluminum plate + graphite coating film | 2056 | 2000 |

| (Example 1) | | |
|---|---|---|
| Aluminum plate + rolled WC particles | 55.6 | 8.8 |

| (Example 2) | | |
|---|---|---|
| Aluminum plate + rolled WC particles + graphite coating film | 96.4 | 27.2 |

For mass production of a metal material like the metal material test pieces of Examples 1 and 2 as a separator or a current collector plate for a fuel cell (especially a PEFC), or the like, it is preferable to use a long coil as the Al substrate and continuously perform the above process 3) with a large rolling mill. For example, a coil having a thickness of 0.3 mm and a width of 320 mm is used as the Al substrate, a surface of the Al substrate is spray-coated with a rolling oil containing WC particles having an average particle size of 1 to 100 µm (preferably a maximum particle size of 10 µm), and the Al substrate is rolled to a thickness of 0.25 mm by applying a rolling load of about 5 to 15 tons with respect to the coil width. Afterwards, the above-mentioned process 6) is performed using an appropriate graphite coating. It is necessary that the graphite coating has corrosion resistance and conductivity in accordance with the application, does not easily peel off after application to the surface of the Al substrate including the passive film and the WC particles, and does not cause the development of cracks and continuous holes.

To use the metal material obtained in this way as a fuel cell separator or the like, it is necessary to further form a groove serving as a gas flow path by press working. The press working is performed after forming the coating film as described above or before forming the coating film. The Al substrate has excellent workability and the coating film thickness of the graphite coating can be thin, and thus, the forming of the groove on the metal material is relatively easy and a fine groove having a width of about 0.4 mm can be formed at low cost.

In another example described below, press working was performed on a metal material to obtain a groove shape.

First, a metal material test piece in which the WC particles 3 are embedded in the Al substrate 1 is prepared in the manner described in 1) to 5) above. The same Al substrate (thickness of 0.3 mm) as in 1) above was used, however, three types of WC particles having different particle sizes were used as described below. Afterwards, the metal material test piece is subjected to press (servo press) working to form a plurality of grooves in parallel having a groove width of 0.5 mm. These grooves correspond to grooves used as a gas flow path in the fuel cell separator.

Figs. 6A to 6E are micrographs of lateral cross sections of the metal material test piece in which the grooves were formed by press working. Fig. 6A is a micrograph of a case where the maximum particle size of the embedded WC particles is 150 µm, Fig. 6C is a micrograph of a case where the particle size of the embedded WC particles is 36 to 106 µm, and Fig. 6E is a micrograph of a case where the maximum particle size of the embedded WC particles is 8.5 µm.

In the example of Fig. 6A in which the maximum particle size of the WC particles was 150 µm, a crack occurred in a part (a portion thinned by the press working) of the metal material test piece as shown in Fig. 6B. In the example of Fig. 6C in which the particle size of the embedded WC particles was 36 to 106 µm, a crack occurred similarly in a part as shown in Fig. 6D. Such cracking may be caused by a loss in continuity in the Al substrate due to presence of large WC particles in the thinned portion of the metal material test piece.

On the other hand, in the example of Fig. 6E in which the maximum particle size of the WC particles was 8.5 µm, there was no crack even in the thinned portion. When a groove having a similar width is formed in an Al substrate having a similar thickness, it is considered that the maximum particle size of the WC particles needs to be 10 µm or less.

In the above description, the metal material is produced by embedding WC particles in the Al substrate. However, a metal material having a similar function can be produced from another material. That is, a metal material having corrosion resistance and low contact resistance can also be produced by using another metal (having a passive film) such as an Al alloy, a copper alloy, or stainless steel as the metal substrate instead of the Al substrate, and using other conductive particles instead of the WC particles. Similarly, instead of the graphite coating used to reinforce the corrosion resistance, another coating having corrosion resistance and conductivity can be used.

For example, an Al-Mg alloy or an Al-Mg-Ti alloy may be used as the Al alloy.

Fig. 1B is a micrograph of the surface of such an Al-Mg-Ti alloy in which WC particles are adhered to the surface of the Al-Mg-Ti alloy in the manner described in 1) to 4) above. Similarly to Fig. 1A, white masses in the image are WC particles.

## Claims

1. A metal material, wherein conductive particles adhere to a metal substrate including, on a surface thereof, a passive film, in a state where the conductive particles penetrate the passive film in a thickness direction, and the surface of the metal substrate is covered with a coating film having conductivity and corrosion resistance.

2. A metal material, wherein WC particles being conductive particles adhere to Al or an Al alloy being a metal substrate including, on a surface thereof, a passive film, in a state where the conductive particles penetrate the passive film in a thickness direction.

3. The metal material according to claim 2, wherein the surface of the metal substrate is covered with a coating film having conductivity and corrosion resistance.

4. The metal material according to claim 3, wherein the surface is covered by a graphite coating.

5. The metal material according to claim 3 or 4, wherein the metal material is used as a fuel cell component.

6. The metal material according to any one of claims 2 to 5, wherein the metal material is a plate-shaped metal material formed with a groove by press working to be used as a fuel cell component, and a particle size of the WC particles is 10 µm or less.

7. A method for producing a metal material, comprising:
pushing, into a surface of a metal substrate including a passive film, conductive particles having a particle size larger than a thickness of the passive film to cause the conductive particles to adhere to the metal substrate in a state where the conductive particles penetrate the passive film in a thickness direction.

8. The method for producing a metal material according to claim 7, comprising:
scattering the conductive particles on the surface of the metal substrate, and performing pressing to push the conductive particles into the surface of the metal substrate.

9. The method for producing a metal material according to claim 8, comprising:
scattering the conductive particles together with a viscous fluid on the surface of the metal substrate when the pressing is performed.

10. The method for producing a metal material according to claim 9, wherein lubricating oil or lubricating grease is used as the viscous fluid.

11. The method for producing a metal material according to any one of claims 7 to 10, comprising:
after pushing the conductive particles into the surface of the metal substrate, forming a coating film having conductivity and corrosion resistance on the surface of the metal substrate.

12. The method for producing a metal material according to any one of claims 7 to 11, wherein
the method is a method for producing a metal material to be used as a fuel cell component, and
the method comprises pushing WC particles being conductive particles having a particle size of 10 µm or less into a surface of plate-shaped Al or an Al alloy being a metal substrate including a passive film, and then forming a groove in the metal substrate by press working, and forming a coating film having conductivity and corrosion resistance on the surface.
